(19)

Europäisches
Patentamt
European
Patent Office
Office européen
des brevets

(11)  **EP 4 020 631 A1**

(12)  # EUROPEAN PATENT APPLICATION
published in accordance with Art. 153(4) EPC

(43) Date of publication:
**29.06.2022 Bulletin 2022/26**

(21) Application number: **20855750.4**

(22) Date of filing: **19.08.2020**

(51) International Patent Classification (IPC):
$H01M\ 4/36$ $^{(2006.01)}$      $H01M\ 4/38$ $^{(2006.01)}$
$H01M\ 4/48$ $^{(2010.01)}$      $H01M\ 4/62$ $^{(2006.01)}$
$H01M\ 4/587$ $^{(2010.01)}$     $C01B\ 33/02$ $^{(2006.01)}$
$C01B\ 33/113$ $^{(2006.01)}$    $C01B\ 33/22$ $^{(2006.01)}$
$C01B\ 32/182$ $^{(2017.01)}$

(52) Cooperative Patent Classification (CPC):
**C01B 32/182; C01B 33/02; C01B 33/113;
C01B 33/22; H01M 4/36; H01M 4/38; H01M 4/48;
H01M 4/587; H01M 4/62;** Y02E 60/10

(86) International application number:
**PCT/KR2020/011062**

(87) International publication number:
**WO 2021/034109 (25.02.2021 Gazette 2021/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.08.2019 KR 20190101356**

(71) Applicant: **Daejoo Electronic Materials Co., Ltd.
Siheung-si, Gyeonggi-do 15094 (KR)**

(72) Inventors:
• **LEE, Seul Gi**
  **Siheung-si, Gyeonggi-do 15094 (KR)**
• **PARK, Hyeon Soo**
  **Siheung-si, Gyeonggi-do 15094 (KR)**
• **OH, Seung Min**
  **Siheung-si, Gyeonggi-do 15094 (KR)**
• **LIM, Jong Chan**
  **Siheung-si, Gyeonggi-do 15094 (KR)**

(74) Representative: **HGF
HGF Limited
1 City Walk
Leeds LS11 9DX (GB)**

(54)  **SILICON?SILICON OXIDE-CARBON COMPLEX, METHOD FOR PREPARING SAME, AND NEGATIVE ELECTRODE ACTIVE MATERIAL COMPRISING SAME FOR LITHIUM SECONDARY BATTERY**

(57)  A silicon • silicon oxide-carbon complex according to an embodiment of the present invention has a core-shell structure in which the core comprises silicon particles, a silicon oxide compound represented by Si-Ox$(0<x\leq 2)$, and magnesium silicate, and the shell forms a carbon coating, and has a specific range of conductivity, whereby the use of the complex as a negative electrode active material for a secondary battery can provide the secondary battery with an improvement in capacity as well as cycle characteristics and initial efficiency.

EP 4 020 631 A1

## Description

### Technical Field

The present invention relates to a silicon/silicon oxide-carbon composite, to a process for preparing the same, and to a negative electrode active material comprising the same for a lithium secondary battery.

### Background Art

In recent years, as electronic devices become smaller, lighter, thinner, and more portable in tandem with the development of the information and communication industry, the demand for a high energy density of batteries used as power sources for these electronic devices is increasing. A lithium secondary battery is a battery that can best meet this demand, and research on small batteries using the same, as well the application thereof to large electronic devices such as automobiles and power storage systems is being actively conducted.

Carbon materials are widely used as a negative electrode active material of such a lithium secondary battery. Silicon-based negative electrode active materials are being studied in order to further enhance the capacity of a battery. Since the theoretical capacity of silicon (4,199 mAh/g) is greater than that of graphite (372 mAh/g) by 10 times or more, a significant enhancement in the battery capacity is expected.

However, when silicon is used as a main raw material as a negative electrode active material, the negative electrode active material expands or contracts during charging and discharging, and cracks may be formed on the surface or inside of the negative electrode active material. As a result, the reaction area of the negative electrode active material increases, the decomposition reaction of the electrolyte takes place, and a film is formed due to the decomposition product of the electrolyte during the decomposition reaction, which may cause a problem in that the cycle characteristics are deteriorated when it is applied to a secondary battery. Thus, attempts have been continued to solve this problem.

Specifically, Japanese Patent No. 5555978 discloses a negative electrode active material as a powder having a cumulative 90% diameter ($D_{90}$) of 50 $\mu$m or less and comprising 1% by weight to 30% by weight of fine powder A having a particle diameter of 2 $\mu$m or more and fine powder B having a particle diameter of less than 2 $\mu$m in which the fine powder A is silicon oxide and the fine powder B is conductive carbon.

Japanese Laid-open Patent Publication No. 2014-67713 discloses a composite negative electrode active material comprising a shell comprising a hollow carbon fiber and a core disposed in the hollow of the hollow carbon fiber in which the core comprises a first metal nanostructure and a conductive material.

Japanese Laid-open Patent Publication No. 2018-48070 discloses a porous silicon composite cluster, which comprises a porous core comprising porous silicon composite secondary particles; and a shell comprising a second graphene disposed on the surface of the porous core, wherein the porous silicon composite secondary particles comprise an aggregate of two or more silicon composite primary particles, and the silicon composite primary particles comprise silicon, silicon oxide ($SiO_x$) ($0 < x < 2$) disposed on the silicon, and a first graphene disposed on the silicon oxide.

In addition, Japanese Laid-open Patent Publication No. 2016-164870 discloses a negative electrode active material in which a carbon film is formed on at least a part of a silicon compound, the specific surface area of the carbon film is 5 $m^2$/g to 1,000 $m^2$/g, and the compression resistivity is $1.0 \times 10^{-3}$ $\Omega \cdot$cm to 1.0 $\Omega \cdot$cm.

However, although these prior art documents relate to a negative electrode active material comprising silicon and carbon, a negative electrode active material comprising silicon has a large deterioration upon repeated charging and discharging and a large volume change due to the occlusion and release of lithium. As a result, there is a problem in that the electrical conductivity of the electrode itself is low, so that there is a limit in enhancing the cycle characteristics.

### Disclosure of Invention

### Technical Problem

A technical problem to be solved by the present invention is to provide a silicon/silicon oxide-carbon composite for a negative electrode active material of a lithium secondary battery, which has high electrical conductivity and small irreversible capacity, so that it is possible to enhance not only the capacity but also the cycle characteristics and initial efficiency of the secondary battery.

Another technical problem to be solved by the present invention is to provide a process for preparing the silicon/silicon oxide-carbon composite.

Still another technical problem to be solved by the present invention is to provide a negative electrode active material for a lithium secondary battery, which comprises the silicon/silicon oxide-carbon composite.

**Solution to Problem**

In order to accomplish the above object, an embodiment of the present invention provides a silicon/silicon oxide-carbon composite having a core-shell structure, wherein the core comprises silicon fine particles, a silicon oxide compound represented by $SiO_x$ (0 < x ≤ 2), and magnesium silicate, the shell is formed of a carbon film, and the electric conductivity of the silicon/silicon oxide-carbon composite is 0.5 S/cm to 10 S/cm.

Another embodiment of the present invention provides a process for preparing a silicon/silicon oxide-carbon composite having a core-shell structure, which comprises a first step of mixing silicon and silicon dioxide to obtain a silicon-silicon oxide mixture; a second step of evaporating and depositing the silicon-silicon oxide mixture and metallic magnesium to obtain a silicon-silicon oxide composite; a third step of cooling the silicon-silicon oxide composite; a fourth step of pulverizing the cooled silicon-silicon oxide composite to obtain a core; and a fifth step of coating the surface of the pulverized silicon-silicon oxide composite with carbon to form a shell on the core, wherein the electric conductivity is 0.5 S/cm to 10 S/cm.

Still another embodiment provides a negative electrode active material for a lithium secondary battery, which comprises the silicon/silicon oxide-carbon composite.

**Advantageous Effects of Invention**

The silicon/silicon oxide-carbon composite according to the embodiment has a core-shell structure, wherein the core comprises silicon fine particles, a silicon oxide compound represented by $SiO_x$ (0 < x ≤ 2), and magnesium silicate, the shell is formed of a carbon film, and the electric conductivity is within a specific range. Thus, when it is used as a negative electrode active material of a secondary battery, it is possible to enhance not only the capacity but also the cycle characteristics and initial efficiency of the secondary battery.

**Best Mode for Carrying out the Invention**

The present invention is not limited to what is disclosed below. Rather, it may be modified in various forms as long as the gist of the invention is not altered.

In this specification, when a part is referred to as "comprising" an element, it is to be understood that the part may comprise other elements as well, unless otherwise indicated.

In addition, all numbers and expressions related to the quantities of components, reaction conditions, and the like used herein are to be understood as being modified by the term "about," unless otherwise indicated.

[Silicon/silicon oxide-carbon composite]

The silicon/silicon oxide-carbon composite according to an embodiment of the present invention has a core-shell structure, wherein the core comprises silicon fine particles, a silicon oxide compound represented by $SiO_x$ (0 < x ≤ 2), and magnesium silicate, the shell is formed of a carbon film, and the electric conductivity of the silicon/silicon oxide-carbon composite is 0.5 S/cm to 10 S/cm.

Hereinafter, the constitution of the silicon/silicon oxide-carbon composite will be described in detail.

**Core**

The core of the silicon/silicon oxide-carbon composite according to an embodiment of the present invention comprises silicon fine particles, a silicon oxide compound represented by $SiO_x$ (0 < x ≤ 2), and magnesium silicate.

Since silicon fine particles, a silicon oxide compound, and magnesium silicate are uniformly dispersed inside the core of the silicon/silicon oxide-carbon composite and firmly bonded to form the core, it is possible to minimize the atomization of the core due to a volume change during charging and discharging.

The content of silicon in the core may be 30% by weight to 80% by weight, specifically, 40% by weight to 70% by weight, more specifically, 40% by weight to 60% by weight, based on the total weight of the silicon/silicon oxide-carbon composite. If the content of silicon is less than 30% by weight, the amount of active material for occlusion and release of lithium is small, which may reduce the charge and discharge capacity of the lithium secondary battery. On the other hand, if it exceeds 80% by weight, the charging and discharge capacity of the lithium secondary battery may be increased, whereas the expansion and contraction of the electrode during charging and discharging may be excessively increased, and the negative electrode active material powder may be further atomized, which may deteriorate the cycle characteristics.

[Silicon fine particles]

As the core of the silicon/silicon oxide-carbon composite comprises silicon fine particles, a high capacity may be achieved when it is applied to a secondary battery.

The silicon fine particles contained in the core of the silicon/silicon oxide-carbon composite may be crystalline or amorphous and, specifically, may be amorphous or in a similar phase thereto. If the silicon fine particles are amorphous or in a similar phase thereto, expansion or contraction during charging and discharging of the lithium secondary battery is small, and such battery performance as capacity characteristics can be further enhanced.

In addition, the silicon fine particles may be present as uniformly dispersed in, or as surrounding, the silicon oxide compound or magnesium silicate. In such an event, expansion or contraction of silicon may be suppressed, thereby enhancing the performance of the secondary battery.

In addition, it is preferable because a lithium alloy having a large specific surface area is formed with the silicon fine particles to thereby suppress the destruction of the bulk. The silicon fine particles react with lithium during charging to form $Li_{4.2}Si$ and return to silicon during discharging.

When the silicon/silicon oxide-carbon composite is subjected to an X-ray diffraction (Cu-K$\alpha$) analysis using copper as a cathode target and calculated by the Scherrer equation based on a full width at half maximum (FWHM) of the diffraction peak of Si (220) around $2\theta = 47.5°$, the silicon fine particles may have a crystallite size of 1 nm to 20 nm, specifically, 3 nm to 10 nm, more specifically, 3 nm to 8 nm. If the crystallite size of the silicon fine particles exceeds 20 nm, cracks may occur in the silicon/silicon oxide-carbon composite due to volume expansion or contraction during charging and discharging, thereby deteriorating the cycle characteristics. In addition, if the crystallite size of the silicon fine particles is less than 1 nm, initial efficiency, discharge capacity, and capacity retention rate may be steeply deteriorated. If the crystallite size of the silicon fine particles is within the above range, there is almost no region that does not discharge, and it is possible to suppress a reduction in the Coulombic efficiency representing the ratio of charge capacity to discharge capacity, that is, the charging and discharging efficiency.

If the silicon fine particles are further atomized to an amorphous or crystallite size of about 3 nm to 6 nm, the density of the silicon/silicon oxide-carbon composite increases, whereby it may approach a theoretical density, and pores may be remarkably reduced. As a result, the density of the matrix is enhanced and the strength is fortified to prevent cracking; thus, the initial efficiency or cycle lifespan characteristics of the secondary battery may be further enhanced.

[Silicon oxide compound represented by $SiO_x$ $(0 < x \le 2)$]

As the core of the silicon/silicon oxide-carbon composite comprises a silicon oxide compound represented by $SiO_x$ $(0 < x \le 2)$, it is possible to enhance the capacity and to reduce the volume expansion when applied to a secondary battery.

The silicon oxide compound may be a silicon-based oxide represented by the formula $SiO_x$ $(0 < x \le 2)$. The silicon oxide compound may be specifically $SiO_x$ $(0.5 \le x \le 1.5)$, more specifically $SiO_x$ $(0.8 < x \le 1.1)$. In the formula $SiO_x$, when x is too small, it may be difficult to prepare an $SiO_x$ powder. If x is too large, the ratio of inert silicon dioxide formed during thermal treatment is large, and there is a concern that the charge and discharge capacity may be deteriorated when it is employed in a lithium secondary battery. In addition, as x in the composition of $SiO_x$ is close to 1, high cycle characteristics may be obtained.

The silicon oxide compound may be amorphous or may have a structure in which silicon fine particles (crystalline) are distributed in the amorphous silicon oxide compound when observed by a transmission electron microscope.

The silicon oxide compound can be obtained by a method comprising cooling and precipitating a silicon oxide gas produced by heating a mixture of silicon dioxide and metallic silicon.

The silicon oxide compound may be employed in an amount of 5% by mole to 45% by mole based on the total silicon/silicon oxide-carbon composite.

If the content of the silicon oxide compound is less than 5% by mole, the volume expansion and lifespan characteristics of the secondary battery may be deteriorated. If it exceeds 45% by mole, the initial irreversible reaction of the secondary battery may increase.

[Magnesium silicate]

As the core of the silicon/silicon oxide-carbon composite comprises magnesium silicate, charge and discharge capacity characteristics and cycle characteristics may be enhanced when it is applied to a secondary battery.

Since magnesium silicate hardly reacts with lithium ions during charging and discharging of a secondary battery, it is possible to reduce the expansion and contraction of the electrode when lithium ions are occluded in the electrode, thereby enhancing the cycle characteristics of the secondary battery. In addition, the strength of the matrix, which is a continuous phase surrounding the silicon fine particles, can be fortified by the magnesium silicate.

The magnesium silicate may be represented by the following Formula 1:

[Formula 1] MgxSiOy

In Formula 1, $0.5 \leq x \leq 2$, and $2.5 \leq y \leq 4$.

The magnesium silicate may comprise at least one selected from $MgSiO_3$ crystals and $Mg_2SiO_4$ crystals.

In addition, according to an embodiment, the magnesium silicate may comprise $MgSiO_3$ crystals and may further comprise $Mg_2SiO_4$ crystals.

In addition, according to an embodiment, the magnesium silicate comprises $MgSiO_3$ crystals and further comprises $Mg_2SiO_4$ crystals. In such an event, in an X-ray diffraction analysis, the ratio IF/IE of an intensity (IF) of the X-ray diffraction peak corresponding to $Mg_2SiO_4$ crystals appearing in the range of $2\theta = 22.3°$ to $23.3°$ to an intensity (IE) of the X-ray diffraction peak corresponding to $MgSiO_3$ crystals appearing in the range of $2\theta = 30.5°$ to $31.5°$ may be greater than 0 to 3.

In addition, the magnesium silicate may comprise substantially a large amount of $MgSiO_3$ crystals in order to enhance the charge and discharge capacity and initial efficiency.

In the present specification, the phrase "comprising substantially a large amount of" a component may mean to comprise the component as a main component or mainly comprise the component.

Specifically, that the magnesium silicate comprises substantially a large amount of $MgSiO_3$ means that a larger amount of $MgSiO_3$ crystals than that of $Mg_2SiO_4$ crystals is comprised. For example, in an X-ray diffraction analysis, the ratio IF/IE of an intensity (IF) of the X-ray diffraction peak corresponding to $Mg_2SiO_4$ crystals appearing in the range of $2\theta = 22.3°$ to $23.3°$ to an intensity (IE) of the X-ray diffraction peak corresponding to $MgSiO_3$ crystals appearing in the range of $2\theta = 30.5°$ to $31.5°$ is 1 or less.

In the magnesium silicate, the content of magnesium relative to $SiO_x$ may have an impact on the initial discharge characteristics or cycle characteristics during charging and discharging. Silicon in the $SiO_x$ may be alloyed with lithium atoms to enhance the initial discharge characteristics. Specifically, if $MgSiO_3$ crystals are employed in the magnesium silicate in a substantially large amount, the improvement effect of the cycle during charging and discharging may be increased.

If the magnesium silicate comprises both $MgSiO_3$ crystals and $Mg_2SiO_4$ crystals, the initial efficiency may be enhanced. If $Mg_2SiO_4$ crystals are employed more than $MgSiO_3$ crystals, the degree of alloying of silicon with lithium atoms is lowered, whereby the initial discharge characteristics may be deteriorated.

When the magnesium silicate comprises both $MgSiO_3$ crystals and $Mg_2SiO_4$ crystals together, it is preferable that the $MgSiO_3$ crystals and $Mg_2SiO_4$ crystals are uniformly dispersed in the core. Their crystallite size may be 30 nm or less, specifically, 20 nm or less.

Silicon in the magnesium silicate reacts with lithium during charging to form $Li_{4.2}Si$ and returns to silicon during discharging. The capacity of the secondary battery may decrease due to a volume change during repeated charging and discharging thereof. However, in particular, the rate of volume change of $MgSiO_3$ crystals is smaller than that of $Mg_2SiO_4$ crystals, so that the cycle characteristics of the secondary battery may be further enhanced. In addition, the $MgSiO_3$ crystals and $Mg_2SiO_4$ crystals may act as a diluent or inert material in a negative electrode active material.

According to an embodiment, when magnesium is doped to $SiO_x$, for example, when silicon oxide (SiO) and magnesium are reacted at a ratio of 1:1, in the preparation of the magnesium silicate, only silicon and MgO are present thermodynamically if the elements are uniformly distributed. However, if the elements are not uniformly distributed, not only silicon and MgO but also other substances such as unreacted silicon oxide and metallic magnesium may be present.

Thus, the core of the silicon/silicon oxide-carbon composite may further comprise MgO, unreacted silicon oxide, and metallic magnesium.

According to an embodiment, when magnesium is doped to $SiO_x$, for example, when SiO and magnesium are reacted, as the doping amount of magnesium increases, it may proceed in the order of the following Reaction Schemes 1 to 3.

[Reaction scheme 1] $3Si(s) + 3SiO_2(s) + 2Mg(s) \rightarrow 6SiO(g) + 2Mg(g)$

[Reaction scheme 2] $3SiO(g) + Mg(g) \rightarrow 2Si(s) + MgSiO_3(s)$

[Reaction scheme 3] $4SiO(g) + 2Mg(g) \rightarrow 3Si(s) + Mg_2SiO_4(s)$

In the above reactions, the production mechanism of $MgSiO_3(s)$ and $Mg_2SiO_4(s)$ may be represented as in the following Reaction Schemes 4 to 6.

[Reaction scheme 4] $SiO + 1/3Mg \rightarrow 2/3Si + 1/3MgSiO_3$

[Reaction scheme 5]      $SiO + 1/2Mg \rightarrow 3/4Si + 1/4Mg_2SiO_4$

[Reaction scheme 6]      $SiO + Mg \rightarrow Si + MgO$

Specifically, when the content of Mg relative to SiO is 1/3% by mole, the reaction takes place as shown in Reaction Scheme 4, and an Si phase, $MgSiO_3$, and unreacted SiO are formed until it reaches 1/3% by mole. When it is 1/3% by mole, Si and $MgSiO_3$ may be formed.

When the content of Mg relative to SiO is 1/3 to 1/2% by mole, the reaction of Reaction Scheme 5 may begin after the reaction of Reaction Scheme 4 is completed. In addition, since a part of $MgSiO_3$ is converted to $Mg_2SiO_4$, Si, $MgSiO_3$, and $Mg_2SiO_4$ may be produced until it reaches 1/2% by mole. In addition, when the content of Mg relative to SiO is 1/2% by mole, Si and $Mg_2SiO_4$ may be produced. Similarly, when the content of Mg relative to SiO is 1/2 to 1% by mole, the reaction of Reaction Scheme 6 begins after the reaction of Reaction Scheme 5 is completed, and a part of $Mg_2SiO_4$ is converted to MgO, so that Si, $Mg_2SiO_4$, and MgO are produced until it reaches 1% by mole. When it is 1% by mole, Si and MgO may be produced.

Meanwhile, if $MgSiO_3$ is formed more than $Mg_2SiO_4$ in the magnesium silicate, the ratio of magnesium to silicon is small, so that the temperature rise due to the evaporation of Mg may be reduced. As a result, the growth of silicon fine particles may be suppressed, so that the crystallite size may be 20 nm or less, which may enhance the cycle characteristics and initial efficiency of the secondary battery.

Meanwhile, since SiO is a mixture of Si and $SiO_2$ ($1/2Si + 1/2SiO_2$) as shown in the following Reaction Scheme 7, $SiO_2$ may be produced by a disproportionation reaction in an actual reaction.

[Reaction scheme 7]      $Si(s) + SiO_2(s) \rightarrow 2SiO(g)$ $2SiO(g) \rightarrow 2SiO(s) \rightarrow Si(s) + SiO_2(s)$ (disproportionation reaction)

In Reaction Scheme 7, $SiO_2$ produced by the disproportionation reaction may react with Li to cause an irreversible reaction to form lithium silicate, thereby deteriorating the initial efficiency.

For example, if 0.4 mole of Mg is added relative to 1 mole of SiO, the content of Mg is 18% by weight. Since the element concentration distribution is uniform, the reaction in accordance with the content of Mg may take place. As described above, $MgSiO_3$ and $Mg_2SiO_4$ may be formed as Mg-containing compounds simultaneously with the formation of Si.

As described above, although the doping amount of magnesium is important for the formation of $MgSiO_3$ crystals (s) and $Mg_2SiO_4$ crystals (s), the degree of uniformity of the element concentration distribution of magnesium may also be important. If the element concentration distribution of magnesium is not uniform, silicon dioxide ($SiO_2$) may be formed, which is not preferable. In addition, if silicon dioxide, metallic magnesium, or an MgSi alloy is formed in the core of the silicon/silicon oxide-carbon composite, the initial efficiency or capacity retention rate of the secondary battery may be deteriorated. Thus, the performance of the secondary battery may be enhanced by making the element concentration distribution of magnesium uniform.

Specifically, in the silicon/silicon oxide-carbon composite, the ratio of Mg atoms in magnesium silicate to Si atoms in the silicon oxide compound, i.e., Mg atoms:Si atoms, may be an atomic ratio of 1:1 to 1:50. Specifically, the Mg atom:Si atom may have an atomic ratio of 1:2 to 1:20. If the atomic ratio of Mg to Si is less than the above range (if the amount of Mg added is large), an excessive amount of $Mg_2SiO_4$ may be formed, so that the initial charge and discharge efficiency may be enhanced, whereas the charge and discharge cycle characteristics may be deteriorated. In addition, if the atomic ratio of Mg atoms to Si atoms exceeds the above range, the improvement effect of initial efficiency may be small.

The silicon/silicon oxide-carbon composite according to an embodiment may have a peak for $MgSiO_3$ crystals appearing in the range of a diffraction angle of $30.5° \leq 2\theta \leq 31.5°$ in an X-ray diffraction analysis. In addition, the silicon/silicon oxide-carbon composite may have a peak for $Mg_2SiO_4$ crystals appearing in the range of a diffraction angle of $22.3° \leq 2\theta \leq 23.3°$ in an X-ray diffraction analysis.

For $MgSiO_3$ crystal, for example, when a line is drawn between the diffraction intensity at $2\theta = 30.5°$ and the diffraction intensity at $2\theta = 31.5°$, and the straight line is a base intensity, if the ratio of the maximum intensity P1 at $2\theta = 31.1 \pm 0.2°$ to the base intensity B1 at the maximum intensity angle, $P1/B1 > 1.1$, it may be determined that $MgSiO_3$ crystals are present.

For $Mg_2SiO_4$, for example, when a line is drawn between the diffraction intensity at $2\theta = 22.3°$ and the diffraction intensity at $2\theta = 23.3°$, and the straight line is a base intensity, if the ratio of the maximum intensity P2 at $2\theta = 22.9 \pm 0.3°$ to the base intensity B2 at the maximum intensity angle, $P2/B2 > 1.1$, it may be determined that $Mg_2SiO_4$ crystals are present.

If the silicon/silicon oxide-carbon composite comprises magnesium silicate, when a negative electrode active material composition is prepared with a polyimide as a binder, a chemical reaction between the negative electrode active material and the binder may be suppressed as compared with the case where lithium is doped. Thus, the use of such a negative electrode active material may enhance the safety of the negative electrode active material composition, which improves not only the safety of the negative electrode but also the cycle characteristics of the secondary battery.

As the core of the silicon/silicon oxide-carbon composite according to an embodiment comprises magnesium silicate, even when lithium ions rapidly increase during charging and discharging, it hardly reacts with lithium ions, so that it produces the effect of reducing the degree of expansion and contraction of the electrode. As a result, the cycle characteristics of the secondary battery may be enhanced. In addition, as the core of the silicon/silicon oxide-carbon composite comprises magnesium silicate, the irreversible capacity is small, so that the ratio ($y/x \times 100$) of the discharge capacity (y) to the charge capacity (x) may be increased.

The content of magnesium may be 3% by weight to 20% by weight, specifically, 3% by weight to 15% by weight, 4% by weight to 15% by weight, or 5% by weight to 15% by weight, more specifically, 5% by weight to 12% by weight, based on the total weight of the silicon/silicon oxide-carbon composite according to an embodiment. If the content of magnesium is 3% by weight or more, the initial efficiency of the secondary battery may be enhanced. If the content of magnesium is 20% by weight or less, the cycle characteristics and handling stability of the secondary battery may be excellent.

In the silicon/silicon oxide-carbon composite according to an embodiment, the core comprises silicon fine particles, a silicon oxide compound, and magnesium silicate, and they are dispersed with each other so that the phase interfaces are in a bonded state, that is, each phase is in a bonded state at the atomic level. Thus, the volume change is small when lithium ions are occluded and released, and cracks do not occur in the negative electrode active material even when charging and discharging are repeated. Accordingly, since there is no steep decrease in the capacity with respect to the number of cycles, the cycle characteristics of the secondary battery may be excellent.

In addition, since each phase of the silicon fine particles, silicon oxide compound, and magnesium silicate is in a bonded state at the atomic level, the detachment of lithium ions is facilitated during discharging of the secondary battery, which makes a good balance between the charge amount and the discharge amount of lithium ions and increases the charge and discharge efficiency. Here, the charge and discharge efficiency (%) refers to the ratio of the discharge capacity (y) to the charge capacity (x) ($y/x \times 100$), indicating the ratio of lithium ions that can be released during discharge among the lithium ions occluded in the negative electrode active material during charging.

The core of the silicon/silicon oxide-carbon composite may have an average particle diameter ($D_{50}$) of 2.0 $\mu$m to 10 $\mu$m, specifically, 2.0 $\mu$m to 9.0 $\mu$m, more specifically, 4.0 $\mu$m to 8.0 $\mu$m. If the average particle diameter ($D_{50}$) of the core is less than 2.0 $\mu$m, the bulk density is too small, and the charge and discharge capacity per unit volume may be deteriorated. On the other hand, if the average particle diameter ($D_{50}$) exceeds 10 $\mu$m, it is difficult to prepare an electrode layer, so that it may be peeled off from the electrical power collector. The average particle diameter ($D_{50}$) is a value measured as a weight average value $D_{50}$, i.e., a particle diameter or median diameter when the cumulative weight is 50% in particle size distribution measurement according to a laser beam diffraction method.

The average particle diameter ($D_{50}$) of the core may be achieved by pulverization of the core particles. In addition, after pulverization to the average particle diameter ($D_{50}$), classification may be carried out to adjust the particle size distribution, for which dry classification, wet classification, or filtration may be used. In the dry classification, the steps of dispersion, separation (separation of fine particles and defective particles), collection (separation of solids and gases), and discharge are carried out sequentially or simultaneously using an air stream, in which pretreatment (adjustment of moisture, dispersibility, humidity, and the like) is carried out prior to classification so as not to decrease the classification efficiency caused by interference between particles, particle shape, airflow disturbance, velocity distribution, and influence of static electricity, and the like, to thereby adjust the moisture or oxygen concentration in the air stream used. In addition, a desired particle size distribution may be obtained by carrying out pulverization and classification at one time.

If core particles having an average particle diameter of 2.0 $\mu$m to 10 $\mu$m are achieved by the pulverization and classification treatment, the initial efficiency or cycle characteristics may be enhanced by about 10% to 20% as compared with before classification. The core particles upon the pulverization and classification may have a $D_{max}$ of about 10 $\mu$m or less. In such a case, the specific surface area of the core particles may decrease; as a result, lithium supplemented to the solid electrolyte interface (SEI) layer may decrease.

In addition, according to an embodiment, a core structure may be formed in which closed pores or voids are introduced to the inside of the core, and silicon, a silicon oxide compound, and magnesium silicate are employed simultaneously and uniformly dispersed in an atomic order. In addition, the size of each particle of the silicon fine particles, silicon oxide compound, and magnesium silicate in the core may be atomized. If the size of each particle of the silicon fine particles, silicon oxide compound, and magnesium silicate is too large, it would be difficult to be present inside the core, and the function as a core cannot be sufficiently performed.

As the silicon/silicon oxide-carbon composite comprises the core, it is possible to suppress volume expansion, and it produces the effect of preventing or reducing a side reaction with an electrolyte. As a result, the discharge capacity, lifespan characteristics, and thermal stability of the secondary battery may be enhanced.

**Shell**

The shell of the silicon/silicon oxide-carbon composite according to an embodiment of the present invention may be formed of a carbon film.

As the silicon/silicon oxide-carbon composite according to an embodiment comprises a shell formed of a carbon film on the surface of the core, a secondary battery having a high capacity can be achieved. In particular, it is possible to solve the problems of volume expansion and stability degradation that may occur as silicon is employed and to enhance the electrical conductivity.

In the silicon/silicon oxide-carbon composite, it is preferable that a carbon film is uniformly formed over the entire surface of the core in order to further enhance the electrical conductivity. If a uniform carbon coating is formed, it is possible to suppress the occurrence of cracks caused by the stress generation due to steep volume expansion of the silicon particles. Since cracks occur irregularly, there may be a region that is electrically blocked, which may lead to a defective battery. Thus, if a uniform carbon coating is formed, it is possible to improve the initial efficiency and lifespan characteristics of the negative electrode active material.

Specifically, as a shell is employed in which a conductive carbon film is formed on the surface in part or in its entirety, specifically, the entire surface of each of the silicon fine particles, silicon oxide compound, and magnesium silicate contained in the core of the silicon/silicon oxide-carbon composite, it is possible to enhance the electric conductivity.

For example, the core may have a structure in which amorphous silicon having a size of several nanometers to several tens of nanometers is finely dispersed in a silicon oxide compound or magnesium silicate. In general, a silicon oxide compound has advantages in that it has a battery capacity 5 to 6 times larger than silicon or carbon and small volume expansion, whereas it has problems in that it has a large irreversible capacity due to an irreversible reaction, a short lifespan, and a very low initial efficiency of 70% or less. Here, the irreversible reaction refers to that Li-Si-O or Si + $Li_2O$ is formed by a reaction with lithium ions during discharging. The problem of short lifespan and low initial efficiency may be attributable to a decrease in the diffusion rate of lithium atoms, that is, a decrease in conductivity, since the structural stability is low during charging and discharging.

Thus, the silicon/silicon oxide-carbon composite according to an embodiment of the present invention is a silicon/silicon oxide-carbon composite having a core-shell structure comprising a shell formed of a carbon film by coating the surface of the core of the silicon-silicon oxide composite with carbon in order to solve the problem of reduced conductivity.

In addition, as a shell is formed on the surface of the core, a side reaction of silicon contained in the core with the electrolyte can be prevented. In addition, if a shell is formed on the surface of the core of the silicon/silicon oxide-carbon composite, it is possible to prevent or alleviate contamination of the silicon fine particles, silicon oxide compound, and magnesium silicate contained in the core.

In addition, in order to further enhance the conductivity, the carbon film of the shell may be formed uniformly and thinly. In such an event, the initial efficiency and lifespan characteristics of the secondary battery may be further enhanced.

According to an embodiment of the present invention, once a core has been prepared in which a uniform carbon film is formed on each surface of silicon fine particles, silicon oxide compound, and magnesium silicate, a so-called double-structured carbon film may be formed as a thin and uniform carbon film is formed as a shell on the surface of the core. If a carbon film in a double structure is formed, there is an effect of preventing each of the silicon fine particles, silicon oxide compound, or magnesium silicate from being exposed to the outside. The so-called double-structured carbon film may be formed by, for example, repeatedly carrying out carbon deposition several times. Thereafter, a double carbon film having a shell function is formed on the surface of the core on which a carbon film has been formed; thus, it is possible to prevent each particle from being exposed to the outside. In such a case, it is possible to maintain an electrical connection despite a volume change of the silicon fine particles, silicon oxide compound, or magnesium silicate during charging and discharging. In addition, even if cracks occur on the surface of the carbon film, it is possible to maintain an electrical connection to the carbon film unless the carbon film is completely separated.

The method for coating the core surface with carbon may be a method of chemical vapor depositing (CVD) the core of a silicon-silicon oxide composite in an organic gas and/or vapor, or a method of introducing an organic gas and/or vapor into the reactor during thermal treatment.

In addition, not only does the thickness of the carbon film or the amount of carbon have an impact on the conductivity, but also the uniformity of the film may be important. For example, even if a sufficient amount of carbon is obtained, if the film is not uniform, whereby the surface of the silicon oxide is partially exposed, or a part thereof is insulating, the charge and discharge capacity or cycle characteristics of the secondary battery may be adversely affected.

According to an embodiment, the content of carbon may be 2% by weight to 20% by weight, specifically, 2% by weight to 19% by weight, more specifically, 3% by weight to 19% by weight, based on the total weight of the silicon/silicon oxide-carbon composite.

If the content of carbon is less than 2% by weight, a sufficient effect of enhancing conductivity cannot be expected, and there is a concern that the electrode lifespan of the lithium secondary battery may be deteriorated. In addition, if it exceeds 20% by weight, the discharge capacity of the secondary battery may decrease and the bulk density may decrease, so that the charge and discharge capacity per unit volume may be deteriorated.

The carbon film may have an average thickness of 5 nm to 200 nm, specifically, 10 nm to 180 nm, more specifically, 10 nm to 150 nm. If the thickness of the carbon film is 5 nm or more, an enhancement in conductivity may be achieved. If it is 200 nm or less, a decrease in capacity of the secondary battery may be suppressed.

Preferably, the carbon film is uniformly coated over the entire surface of the core, which may enable the optimization of the thickness range of the carbon film to be achieved. In addition, the optimization of the thickness of the carbon film produces an effect of effectively preventing or alleviating the atomization of the core even if the volume of the core comprising silicon is changed due to the intercalation and detachment of lithium.

The average thickness of the carbon film may be measured, for example, by the following procedure.

First, the negative electrode active material is observed at an arbitrary magnification by a transmission electron microscope (TEM). The magnification is preferably, for example, a degree that can be confirmed with the naked eyes. Subsequently, the thickness of the carbon film is measured at arbitrary 15 points. In such an event, it is preferable to select the measurement positions at random widely as much as possible, without concentrating on a specific region. Finally, the average value of the thicknesses of the carbon film at the 15 points is calculated.

The carbon film may comprise at least one selected from the group consisting of graphene, reduced graphene oxide, and graphene oxide. In addition, the carbon film may further comprise at least one selected from the group consisting of a carbon nanotube and a carbon fiber.

The carbon film may enhance the electrical contact between the particles while maintaining the outer appearance of the shell. In addition, excellent electrical conductivity may be secured even after the electrode is expanded during charging and discharging, so that the performance of the secondary battery can be further enhanced.

The silicon/silicon oxide-carbon composite may have a specific gravity of 1.8 g/cm3 to 3.2 g/cm$^3$. If the specific gravity of the silicon/silicon oxide-carbon composite is less than 1.8 g/cm$^3$, the rate characteristics of the secondary battery may be deteriorated. If it exceeds 3.2 g/cm$^3$, the contact area with the electrolyte increases, which may cause a problem in that the decomposition reaction of the electrolyte may be expedited or a side reaction of the battery may take place. The specific gravity of the silicon/silicon oxide-carbon composite may be measured using a particle density measuring device commonly used in the art. For example, it may be measured using Accupyc II of Micromeritics.

Meanwhile, the silicon/silicon oxide-carbon composite may have a compressed density of 0.5 g/cc to 2.0 g/cc, specifically, 0.8 g/cc to 1.8 g/cc. The compressed density of the silicon/silicon oxide-carbon composite may be measured using Geopyc 1365 of Micromeritics commonly used in the art.

In addition, the silicon/silicon oxide-carbon composite may have a specific surface area of 3 m$^2$/g to 20 m$^2$/g. If the specific surface area of the silicon/silicon oxide-carbon composite is less than 3 m$^2$/g, the rate characteristics of the secondary battery may be deteriorated. If it exceeds 20 m$^2$/g, the contact area with the electrolyte increases, which may cause a problem in that the decomposition reaction of the electrolyte may be expedited or a side reaction of the battery may take place. The specific surface area of the silicon/silicon oxide-carbon composite may be specifically 4 m$^2$/g to 15 m$^2$/g, more specifically, 4 m$^2$/g to 10 m$^2$/g. The specific surface area can be measured by the BET method by nitrogen adsorption. For example, a specific surface area measuring device (Macsorb HM (model 1210) of MOUNTECH, Belsorp-mini II of Microtrac BEL, or the like) generally used in the art may be used.

The silicon/silicon oxide-carbon composite may have an electrical conductivity of 0.5 S/cm to 10 S/cm, specifically, 0.8 S/cm to 8 S/cm, more specifically, 0.8 S/cm to 6 S/cm. The electrical conductivity of a negative electrode active material is an important factor for facilitating electron transfer during an electrochemical reaction. However, when a high-capacity negative electrode active material is prepared using silicon particles or a silicon oxide compound, it is not easy to achieve an appropriate level of electrical conductivity. Accordingly, according to an embodiment of the present invention, there is provided a silicon/silicon oxide-carbon composite having a core-shell structure comprising a shell formed of a carbon film on the surface of a core comprising silicon fine particles, silicon oxide, and magnesium silicate, whereby it is possible to achieve a negative electrode active material having an electrical conductivity of 0.5 S/cm to 10 S/cm and, at the same time, to enhance not only the capacity characteristics but also the lifespan characteristics and initial efficiency of the secondary battery by controlling the thickness expansion of the silicon fine particles, silicon oxide compound, and magnesium silicate.

According to an embodiment of the present invention, there is provided a process for preparing the silicon/silicon oxide-carbon composite.

The process for preparing a silicon/silicon oxide-carbon composite comprises a first step of mixing silicon and silicon dioxide to obtain a silicon-silicon oxide mixture; a second step of evaporating and depositing the silicon-silicon oxide mixture and metallic magnesium to obtain a silicon-silicon oxide composite; a third step of cooling the silicon-silicon oxide composite; a fourth step of pulverizing the cooled silicon-silicon oxide composite to obtain a core; and a fifth step of coating the surface of the pulverized silicon-silicon oxide composite with carbon to form a shell on the core, wherein the electric conductivity is 0.5 S/cm to 10 S/cm.

Specifically, in the process for preparing a silicon/silicon oxide-carbon composite, the first step may comprise mixing silicon and silicon dioxide to obtain a silicon-silicon oxide mixture.

The mixing may be mixing of a silicon powder and a silicon dioxide powder such that the molar ratio of the oxygen element per mole of the silicon element is 0.9 to 1.1. Specifically, a silicon powder and a silicon dioxide powder may be mixed at a molar ratio of the oxygen element per mole of the silicon element being 1.01 to 1.08.

In the process for preparing a silicon/silicon oxide-carbon composite, the second step may comprise evaporating and depositing the silicon-silicon oxide mixture and metallic magnesium to obtain a silicon-silicon oxide composite.

In the second step, the silicon-silicon oxide mixture and metal magnesium may be put into a crucible of a vacuum reactor and evaporated.

The heating in the second step may be carried out at 500°C to 1,600°C, specifically, 600°C to 1,500°C.

Meanwhile, the deposition in the second step may be carried out at 300°C to 800°C, specifically, 400°C to 700°C.

In the process for preparing a silicon/silicon oxide-carbon composite, the third step may comprise cooling the silicon-silicon oxide composite.

The cooling may be carried out by rapidly cooling to room temperature by water cooling. In addition, it may be carried out at room temperature while an inert gas is injected. The inert gas may be at least one selected from carbon dioxide gas, argon (Ar), water vapor ($H_2O$), helium (He), nitrogen ($N_2$), and hydrogen ($H_2$).

In the process for preparing a silicon/silicon oxide-carbon composite, the fourth step may comprise pulverizing the cooled silicon-silicon oxide composite to obtain a core.

The pulverization may be carried out such that the core has an average particle diameter ($D_{50}$) of 2.0 $\mu$m to 10 $\mu$m, specifically, 2.0 $\mu$m to 9.0 $\mu$m, more specifically, 4.0 $\mu$m to 8.0 $\mu$m. The pulverization may be carried out using a pulverizer or a sieve commonly used.

In the process for preparing a silicon/silicon oxide-carbon composite, the fifth step may comprise coating the surface of the pulverized silicon-silicon oxide composite with carbon to form a shell on the core.

In this step, a carbon layer is formed on the surface of the silicon-silicon oxide composite, and the carbon layer may impart conductivity to the core material. The carbon layer may be formed by a gas-phase reaction or thermal decomposition of a carbon precursor at 600°C to 1,200°C.

The carbon layer may comprise at least one selected from the group consisting of graphene, reduced graphene oxide, and graphene oxide.

The carbon precursor may be formed from a reaction gas comprising at least one of the compounds represented by the following Formulae 2 and 3.

[Formula 2] $\quad\quad C_N H_{(2N\ +\ 2\text{-}A)}[OH]_A$

in Formula 2, N is an integer of 1 to 20, and A is 0 or 1,

[Formula 3] $\quad\quad C_N H_{(2N)}$

in Formula 3, N is an integer of 2 to 6.

The compound represented by Formulae 2 and 3 may be methane, ethane, propane, ethylene, propylene, methanol, ethanol, or propanol.

The reaction gas may further comprise a compound represented by the following Formula 4.

[Formula 4] $\quad\quad CxHyOz$

in Formula 4, x is an integer of 1 to 20, y is an integer of 0 to 20, and z is an integer of 0 to 2.

The compound represented by Formula 4 may be carbon dioxide, acetylene, butadiene, benzene, toluene, xylene, pitch, or the like. The reaction gas may further comprise water vapor.

If the reaction gas comprises water vapor or carbon dioxide gas, a silicon-carbon composite having higher conductivity may be prepared. Since a carbon layer with high crystallinity is formed by the reaction of the reaction gas in the presence of water vapor or carbon dioxide gas, high conductivity can be achieved even when a smaller amount of carbon is coated.

In such an event, the content of water vapor or carbon dioxide gas may be, for example, 0.01% by volume to 30% by volume based on the total volume of the reaction gas, but it is not limited thereto.

The reaction gas comprises a carbon source gas. The carbon source gas may be, for example, at least one of a mixed gas comprising methane ($CH_4$) and an inert gas and a mixed gas comprising methane and oxygen.

As an example, the carbon source gas may be a mixed gas comprising methane ($CH_4$) and carbon dioxide ($CO_2$) or a mixed gas comprising methane ($CH_4$), carbon dioxide ($CO_2$), and water vapor ($H_2O$).

The inert gas may be argon, hydrogen, nitrogen, or helium.

The gas-phase reaction may be carried out by thermal treatment at a temperature of 600°C to 1,200°C. Specifically, it may be carried out at 700°C to 1,100°C. More specifically, it may be carried out at 700°C to 1,000°C.

According to an embodiment, the coating of carbon may be carried out on the surface of the core by injecting at least one selected from a compound represented by the above Formulae 2 to 4 and carrying out a reaction in a gaseous state at 600°C to 1,200°C.

Specifically, the coating of carbon may be carried out at 600°C to 1,200°C by injecting a carbon source gas comprising at least one selected from the group consisting of methane, ethane, propane, ethylene, acetylene, benzene, toluene, and xylene; and an inert gas comprising at least one selected from the group consisting of carbon dioxide gas, argon, water vapor, helium, nitrogen, and hydrogen.

The pressure during the thermal treatment may be controlled by adjusting the amount of the reaction gas introduced and the amount of the reaction gas discharged. For example, the pressure may be 1 atm or more. For example, it may be 2 atm or more, 3 atm or more, 4 atm or more, 5 atm or more, but it is not limited thereto.

In addition, the thermal treatment time is not limited, but it may be appropriately adjusted depending on the thermal treatment temperature, the pressure during the thermal treatment, the composition of the gas mixture, and the desired amount of carbon coating. For example, the thermal treatment time may be 10 minutes to 100 hours, specifically, 30 minutes to 90 hours, more specifically, 50 minutes to 40 hours.

More specifically, the thermal treatment for coating of carbon may be carried out 30 minutes to 5 hours, specifically, 1 hour to 5 hours, at 600°C to 1,000°C. According to another embodiment, the thermal treatment for coating of carbon may be carried out 30 minutes to less than 4 hours, specifically, 30 minutes to 3 hours, at higher than 1,000°C to 1,200°C.

According to an embodiment, as the thermal treatment time increases within the above range, the thickness of the carbon film formed may increase. When the thickness is adjusted to an appropriate level, the electrical properties of the silicon/silicon oxide-carbon composite may be enhanced. However, if the thermal treatment time is excessively long at a high temperature, the electrical properties may be enhanced, whereas the initial efficiency or capacity retention may be deteriorated.

In the formation of a carbon film on the silicon/silicon oxide-carbon composite, a gas-phase reaction of a carbon source gas is involved, so that a shell having a uniform carbon film formed on the surface of the core may be obtained even at a relatively low temperature. In the silicon/silicon oxide-carbon composite thus formed, the detachment reaction of the carbon film does not readily take place. In addition, a carbon film having high crystallinity may be formed through a gas-phase reaction; thus, when the silicon/silicon oxide-carbon composite is used as a negative electrode active material, the electrical conductivity of the negative electrode active material can be enhanced without changing the structure.

The carbon film may comprise at least one selected from the group consisting of graphene, reduced graphene oxide, and graphene oxide.

The structure of graphene, reduced graphene oxide, and graphene oxide may be a layer, a nanosheet type, or a structure in which several flakes are mixed.

The layer may refer to the form of a film in which graphene is continuously and uniformly formed on the surface of at least one selected from silicon fine particles, a silicon oxide compound, magnesium silicate, and a reduction product thereof.

The nanosheet may refer to a case in which graphene is non-uniformly formed on the surface of at least one selected from silicon fine particles, a silicon oxide compound, magnesium silicate, and a reduction product thereof.

In addition, the flake may refer to a case where a part of the nanosheet or membrane is damaged or deformed.

According to an embodiment, in the silicon/silicon oxide-carbon composite having a core-shell structure, a graphene-containing material that is excellent in conductivity and flexible in volume expansion is directly grown on the surface of the core to form a shell, so that it is possible to suppress volume expansion and to reduce a phenomenon in which silicon fine particles or a silicon oxide compound is pressed and contracted. In addition, since the direct reaction of silicon contained in the core with the electrolyte can be controlled by graphene, it is possible to reduce the formation of an SEI layer of the electrode. As the core of the silicon/silicon oxide-carbon composite is immobilized by the shell in this way, it is possible to suppress structural collapse due to volume expansion of silicon fine particles, a silicon oxide compound, and magnesium silicate even if a binder is not used in the preparation of the negative electrode active material composition, and it can be advantageously used in the manufacture of an electrode and a lithium secondary battery having excellent electrical conductivity and capacity characteristics by minimizing an increase in resistance.

**Negative electrode active material**

The negative electrode active material according to an embodiment may comprise the silicon/silicon oxide-carbon composite. Specifically, the negative electrode active material may comprise a silicon/silicon oxide-carbon composite having a core-shell structure, wherein the core comprises silicon fine particles, a silicon oxide compound represented by $SiO_x$ (0 < x ≤ 2), and magnesium silicate, the shell is formed of a carbon film, and the electric conductivity is 0.5 S/cm to 10 S/cm.

In addition, the negative electrode active material may further comprise a carbon-based negative electrode material.

Specifically, the negative electrode active material may be used as a mixture of the silicon/silicon oxide-carbon composite and the carbon-based negative electrode material. In such an event, the electrical resistance of the negative electrode active material can be reduced, while the expansion stress involved in charging can be relieved at the same time. The carbon-based negative electrode material may comprise, for example, at least one selected from the group consisting of natural graphite, synthetic graphite, soft carbon, hard carbon, mesocarbon, carbon fiber, carbon nanotube, pyrolytic carbon, coke, glass carbon fiber, sintered organic high molecular compound, and carbon black.

The content of the carbon-based negative electrode material may be 30% by weight to 95% by weight, specifically, 30% by weight to 90% by weight, more specifically, 50% by weight to 80% by weight, based on the total weight of the negative electrode active material.

According to an embodiment, the present invention may provide a negative electrode comprising the negative electrode active material and a secondary battery comprising the same.

The secondary battery may comprise a positive electrode, a negative electrode, a separator interposed between the positive electrode and the negative electrode, and a non-aqueous liquid electrolyte in which a lithium salt is dissolved. The negative electrode active material may comprise a negative electrode active material comprising a silicon/silicon oxide-carbon composite.

The negative electrode may be composed of a negative electrode mixture only or may be composed of a negative electrode current collector and a negative electrode mixture layer supported thereon. Similarly, the positive electrode may be composed of a positive electrode mixture only or may be composed of a positive electrode current collector and a positive electrode mixture layer supported thereon. In addition, the negative electrode mixture and the positive electrode mixture may further comprise a conductive material and a binder.

Materials known in the field may be used as the material constituting the negative electrode current collector and the material constituting the positive electrode current collector. Materials known in the field may be used as the binder and the conductive material added to the negative electrode and the positive electrode.

If the negative electrode is composed of a current collector and an active material layer supported thereon, the negative electrode may be prepared by coating the negative electrode active material composition comprising the silicon/silicon oxide-carbon composite having a core-shell structure on the surface of the current collector and drying it.

In addition, the secondary battery comprises a non-aqueous liquid electrolyte in which the non-aqueous liquid electrolyte may comprise a non-aqueous solvent and a lithium salt dissolved in the non-aqueous solvent. A solvent commonly used in the field may be used as the non-aqueous solvent. Specifically, an aprotic organic solvent may be used. Examples of the aprotic organic solvent include cyclic carbonates such as ethylene carbonate, propylene carbonate, and butylene carbonate, cyclic carboxylic acid esters such as furanone, chain carbonates such as diethyl carbonate, ethylmethyl carbonate, and dimethyl carbonate, chain ethers such as 1,2-methoxyethane, 1,2-ethoxyethane, and ethoxymethoxyethane, and cyclic ethers such as tetrahydrofuran and 2-methyltetrahydrofuran. They may be used alone or in combination of two or more.

**Mode for the Invention**

According to an embodiment of the present invention, in a secondary battery comprising a silicon/silicon oxide-carbon composite having a core-shell structure as a negative electrode active material, its capacity can be enhanced, and its cycle characteristics and initial efficiency can be enhanced.

**Example**

<Example 1>

**Preparation of a silicon/silicon oxide-carbon composite**

Step 1: 8 kg of a silicon powder having an average particle diameter of 20 μm and 16 kg of a silicon dioxide powder having an average particle diameter of 20 nm were added to 50 kg of water, which was homogeneously mixed for 12 hours and then dried at 200°C for 24 hours to obtain a silicon-silicon oxide mixture.

Step 2: The silicon-silicon oxide mixture and 1 kg of metallic magnesium were put into a vacuum reactor, and the temperature was raised to 1,400°C to evaporate and deposit them for 5 hours to obtain a silicon-silicon oxide composite.

Step 3: The silicon-silicon oxide composite deposited on the substrate in the crucible was rapidly cooled to room temperature by water cooling.

Step 4: The cooled silicon-silicon oxide composite was pulverized and classified by a mechanical method for particle size control to obtain a silicon-silicon oxide composite A (a core) having an average particle diameter of 6 μm.

Step 5: 50 g of the silicon-silicon oxide composite was put into a tube-type electric furnace and reacted at 950°C for 3 hours with methane gas and carbon dioxide gas flowing at 1 liter/minute, respectively, whereby a silicon/silicon oxide-carbon composite whose surface was coated with carbon was prepared.

**Manufacture of a secondary battery**

A negative electrode and a battery (coin cell) comprising the silicon/silicon oxide-carbon composite as a negative electrode active material were prepared.

The negative electrode active material, Super-P as a conductive material, and polyacrylic acid were mixed at a weight ratio of 80:10:10 with water to prepare a negative electrode active material composition having a solids content of 45%.

The negative electrode active material composition was applied to a copper foil having a thickness of 18 μm and dried to prepare an electrode having a thickness of 70 μm. The copper foil coated with the electrode was punched in a circular shape having a diameter of 14 mm to prepare a negative electrode plate for a coin cell.

Meanwhile, a metallic lithium foil having a thickness of 0.3 mm was used as a positive electrode plate.

A porous polyethylene sheet having a thickness of 25 μm was used as a separator. A liquid electrolyte in which $LiPF_6$ had been dissolved at a concentration of 1 M in a mixed solvent of ethylene carbonate (EC) and diethylene carbonate (DEC) at a volume ratio of 1:1 was used as an electrolyte. The above components were employed to manufacture a coin cell (battery) having a thickness of 3.2 mm and a diameter of 20 mm (CR2032 type).

<Example 2> Preparation of a silicon/silicon oxide-carbon composite and a secondary battery

A silicon/silicon oxide-carbon composite was prepared and a secondary battery using the same was manufactured in the same manner as in Example 1, except that 2 kg of metallic magnesium was used in Step 2 of Example 1 and that the reaction was carried out at 950°C for 2 hours in Step 5.

<Example 3> Preparation of a silicon/silicon oxide-carbon composite and a secondary battery

A silicon/silicon oxide-carbon composite was prepared and a secondary battery using the same was manufactured in the same manner as in Example 1, except that the reaction was carried out at 850°C for 3.5 hours in Step 5 of Example 1.

<Example 4> Preparation of a silicon/silicon oxide-carbon composite and a secondary battery

A silicon/silicon oxide-carbon composite was prepared and a secondary battery using the same was manufactured in the same manner as in Example 1, except that the reaction was carried out at 1,050°C for 1 hour with argon gas, methane gas, and carbon dioxide gas flowing at 1 liter/minute, respectively, in Step 5 of Example 1.

<Example 5> Preparation of a silicon/silicon oxide-carbon composite and a secondary battery

A silicon/silicon oxide-carbon composite was prepared and a secondary battery using the same was manufactured in the same manner as in Example 1, except that the reaction was carried out at 920°C for 2 hours with argon gas and methane gas flowing at 1 liter/minute, respectively, in Step 5 of Example 1.

<Example 6> Preparation of a silicon/silicon oxide-carbon composite and a secondary battery

A silicon/silicon oxide-carbon composite was prepared and a secondary battery using the same was manufactured in the same manner as in Example 1, except that 2 kg of metallic magnesium was used in Step 2 of Example 1 and that the reaction was carried out at 950°C for 2 hours with argon gas and methane gas in Step 5.

<Example 7> Preparation of a silicon/silicon oxide-carbon composite and a secondary battery

A silicon/silicon oxide-carbon composite was prepared and a secondary battery using the same was manufactured in the same manner as in Example 1, except that a silicon-silicon oxide composite having an average particle diameter of 2.5 $\mu$m was obtained by changing the pulverization and classification conditions in Step 4 of Example 1 and that the reaction was carried out at 950°C for 4 hours with methane gas, carbon dioxide gas, and $H_2O$ flowing at 1 liter/minute, respectively, in Step 5.

<Example 8> Preparation of a silicon/silicon oxide-carbon composite and a secondary battery

A silicon/silicon oxide-carbon composite was prepared and a secondary battery using the same was manufactured in the same manner as in Example 1, except that 2 kg of metallic magnesium was used in Step 2 of Example 1 and that the reaction was carried out at 950°C for 4 hours with argon gas and methane gas in Step 5.

<Example 9> Preparation of a silicon/silicon oxide-carbon composite and a secondary battery

A silicon/silicon oxide-carbon composite was prepared and a secondary battery using the same was manufactured in the same manner as in Example 1, except that the reaction was carried out at 1,050°C for 2 hours with argon gas and methane gas flowing at 1 liter/minute, respectively, in Step 5 of Example 1.

<Example 10> Preparation of a silicon/silicon oxide-carbon composite and a secondary battery

A silicon/silicon oxide-carbon composite was prepared and a secondary battery using the same was manufactured in the same manner as in Example 1, except that 3 kg of metallic magnesium was used in Step 2 of Example 1 and that the reaction of the silicon-silicon oxide composite was carried out at 1,000°C for 2 hours with argon gas and methane gas in Step 5.

<Example 11> Preparation of a silicon/silicon oxide-carbon composite and a secondary battery

A silicon/silicon oxide-carbon composite was prepared and a secondary battery using the same was manufactured in the same manner as in Example 1, except that 2 kg of metallic magnesium was used in Step 2 of Example 1 and that the reaction was carried out at 1,050°C for 4 hours with argon gas, methane gas, and carbon dioxide gas flowing at 1 liter/minute, respectively, in Step 5.

<Example 12> Preparation of a silicon/silicon oxide-carbon composite and a secondary battery

A silicon/silicon oxide-carbon composite was prepared and a secondary battery using the same was manufactured in the same manner as in Example 1, except that 2 kg of metallic magnesium was used in Step 2 of Example 1 and that the reaction was carried out at 1,300°C for 2 hours with argon gas, methane gas, and carbon dioxide gas flowing at 1 liter/minute, respectively, in Step 5.

<Example 13> Preparation of a silicon/silicon oxide-carbon composite and a secondary battery

A silicon/silicon oxide-carbon composite was prepared and a secondary battery using the same was manufactured in the same manner as in Example 1, except that 2 kg of metallic magnesium was used in Step 2 of Example 1 and that the reaction was carried out at 550°C for 5 hours with argon gas and acetylene gas flowing at 1 liter/minute, respectively, in Step 5.

<Comparative Example 1> Preparation of a silicon oxide-carbon composite and a secondary battery

A silicon oxide-carbon composite was prepared and a secondary battery using the same was manufactured in the same manner as in Example 1, except that metallic magnesium was not used in Step 2 of Example 1 and that the reaction of the silicon oxide was carried out at 950°C for 2 hours with methane gas and carbon dioxide gas flowing at 1 liter/minute, respectively, in Step 5.

<Comparative Example 2> Preparation of a silicon oxide composite and a secondary battery

A silicon oxide composite was prepared and a secondary battery using the same was manufactured in the

14

same manner as in Comparative Example 1, except that Step 5 of Comparative Example 1 was not carried out.

<Comparative Example 3> Preparation of a silicon-silicon oxide composite and a secondary battery

A silicon-silicon oxide composite was prepared and a secondary battery using the same was manufactured in the same manner as in Example 1, except that Step 5 of Example 1 was not carried out.

<Comparative Example 4> Preparation of a silicon-silicon oxide composite and a secondary battery

A silicon-silicon oxide composite was prepared and a secondary battery using the same was manufactured in the same manner as in Example 1, except that 2 kg of metallic magnesium was used in Step 2 of Example 1 and that Step 5 of Example 1 was not carried out.

The experimental conditions, the content of each component, the thickness and particle size, and the like of Examples 1 to 13 and Comparative Examples 1 to 4 are summarized in Tables 1 and 2 below.

[Table 1]

| | Example | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| Mg content[1] (% by weight) | 6 | 10 | 6 | 6 | 6 | 11 | 6 | 10 | 6 | 15 | 10 | 10 | 10 |
| Particle diameter[2] $D_{50}$ ($\mu$m) | 7 | 8.3 | 6.4 | 6.9 | 7.1 | 18 | 2.5 | 8.8 | 8.6 | 10 | 8.7 | 9 | 6.4 |
| IF/IF[3] | 0.08 | 0.57 | 0.08 | 0.08 | 0.08 | 1.67 | 0.09 | 1.64 | 0.07 | 2.17 | 1.8 | 2.3 | 0.7 |
| Gas for carbon coating | Methane, carbon dioxide | Methane, carbon dioxide | Methane, carbon dioxide | Argon, methane, carbon dioxide | Argon, methane | Argon, methane | Methane, carbon dioxide, $H_2O$ | Argon, methane | Argon, methane | Argon, methane | Argon, methane, carbon dioxide | Argon, methane, carbon dioxide | Argon, acetylene |
| Temp. (°C)/ reaction time (hr) | 950/3 | 950/2 | 850/3 | 1,050/1 | 920/2 | 950/2 | 950/4 | 950/4 | 1,050/2 | 1,000/2 | 1,050/4 | 1,300/2 | 550/5 |
| C content (% by weight) | 6 | 5 | 3 | 5 | 3 | 8 | 15 | 17 | 10 | 7 | 21 | 25 | 1.6 |
| Thickness of carbon film (nm) | 55 | 60 | 22 | 58 | 30 | 40 | 150 | 120 | 60 | 45 | 250 | 310 | 2 |
| Si crystallite size (nm) | 8.9 | 10 | 7.6 | 10.1 | 8.8 | 10 | 8.8 | 9 | 12.5 | 12 | 15 | 23 | 8 |

(1) Content of magnesium based on the total weight of the silicon/silicon dioxide-carbon composite (% by weight)

(2) Particle diameter of the silicon/silicon dioxide-carbon composite ($D_{50}$ ($\mu$m))

(3) Ratio (IF/IE) of XRD peak intensity of $Mg_2SiO_4$ (F Phase) to that of $MgSiO_3$ (E phase)

[Table 2]

| | Comparative Example | | | |
|---|---|---|---|---|
| | 1 | 2 | 3 | 4 |
| Mg content[1] (% by weight) | × | × | 6 | 10 |
| Particle diameter[2] $D_{50}$ (μm) | 7.4 | 7.4 | 7.3 | 6.3 |
| IF/IF[3] | - | - | 0.06 | 0.57 |
| Gas for carbon coating | Methane, carbon dioxide | × | × | × |
| Temp. (°C)/reaction time (hr) | 950/2 | × | × | × |
| C content (% by weight) | 3 | × | × | × |
| Thickness of carbon film (nm) | 30 | × | × | × |
| Si crystallite size (nm) | 5 | 0.1 | 6 | 8 |
| (1) Content of magnesium based on the total weight of the silicon/silicon dioxide-carbon composite (% by weight) <br> (2) Particle diameter of the silicon/silicon dioxide-carbon composite ($D_{50}$ (μm)) <br> (3) Ratio (IF/IE) of XRD peak intensity of $Mg_2SiO_4$ (F Phase) to that of $MgSiO_3$ (E phase) | | | | |

**Test Example**

Test Example 1: Measurement of specific surface area

The composites prepared in the Examples and Comparative Examples were degassed at 350°C for 2 hours. The specific surface area thereof was measured with Macsorb HM (model 1210) of MOUNTECH by the BET one-point method with a flow of a mixed gas of nitrogen and helium ($N_2$: 30% by volume and He: 70% by volume).

Test Example 2: Measurement of X-ray diffraction

The composites prepared in the Examples and Comparative Examples were each analyzed with an X-ray diffraction analyzer (Malvern Panalytical, X'Pert3).

The applied voltage was 40 kV and the applied current was 40 mA. The range of 2θ was 10° to 90°, and it was measured by scanning at intervals of 0.05°.

Test Example 3: Measurement of electrical conductivity

Gold (Au) was deposited to a thickness of 100 nm in an atmosphere of 100 W and argon (Ar) using a hard mask on the upper and lower portions of the composites prepared in the Examples and Comparative Examples to obtain a cell. The ionic conductivity at 25°C was measured from the response obtained by applying alternating current with two blocking electrodes using an impedance analyzer (Zahner, IM6).

Test Example 4: Measurement of specific gravity and compressed density

0.4 g of the prepared composite was placed in a 10-ml container and measured for the specific gravity using Accupyc II of Micromeritics.

5 g of the prepared composite was weighed and placed in a container (a milliliter test tube) and measured for the compressed density under a compression of 108 N using Geopyc 1365 of Micromeritics.

Test Example 5: Measurement of capacity, initial efficiency, and capacity retention rate of secondary batteries

The coin cells (secondary batteries) prepared in the Examples and Comparative Examples were each charged at a constant current of 0.1 C until the voltage reached 0.005 V and discharged at a constant current of 0.1 C until the voltage reached 2.0 V to measure the charge capacity (mAh /g), discharge capacity (mAh/g), and initial efficiency (%). The results are shown in Table 4 below.

[Equation 1]

$$\text{Initial efficiency (\%)} = \text{discharge capacity/charge capacity} \times 100$$

In addition, the coin cells prepared in the Examples and Comparative Examples were each charged and discharged once in the same manner as above and, from the second cycle, charged at a constant current of 0.5 C until the voltage reached 0.005 V and discharged at a constant current of 0.5 C until the voltage reached 2.0 V to measure the cycle characteristics (capacity retention rate for 50 cycles, %). The results are shown in Tables 3 and 4 below.

[Equation 2]

$$\text{Capacity retention rate for 50 cycles (\%)} = 50^{\text{th}} \text{ discharge capacity/}2^{\text{nd}} \text{ discharge}$$

$$\text{capacity} \times 100$$

[Table 3]

| | Example | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| Specific gravity of the composite (g/cm$^3$) | 2.37 | 2.42 | 2.51 | 2.39 | 2.35 | 2.1 | 1.95 | 2 | 2.43 | 2.26 | 2.8 | 3.12 | 2.43 |
| Specific surface area of the composite (m$^2$/g) | 3.4 | 4.2 | 2.3 | 3.8 | 7 | 3 | 5.7 | 9 | 5.5 | 6.1 | 8.2 | 7.9 | 16 |
| Electrical conductivity (S/cm) | 3.76 | 3.21 | 1.95 | 4.56 | 1.04 | 3.37 | 5.36 | 4.31 | 4.14 | 3.45 | 4.3 | 4.8 | 0.8 |
| Compressed density (g/cc) | 1.38 | 1.58 | 1.82 | 1.87 | 1.73 | 1.34 | 1.13 | 0.88 | 1.50 | 1.49 | 1 | 1.2 | 2.1 |
| Discharge capacity (mAh/g) | 1,467 | 1,320 | 1,440 | 1,455 | 1,450 | 1,319 | 1,400 | 1,305 | 1,421 | 1.259 | 1,290 | 1,265 | 1,240 |
| Initial efficiency (%) | 80.2 | 83.4 | 80.1 | 80 | 79.8 | 83.8 | 80.4 | 82.9 | 80.2 | 86.9 | 81.2 | 81.3 | 78.3 |
| Capacity retention rate (%, at 50 cycles) | 91.5 | 88.7 | 90.8 | 89.3 | 90.6 | 86.5 | 87.3 | 91.8 | 86.4 | 87.2 | 72.0 | 70.5 | 75.2 |

[Table 4]

| | Comparative Example | | | |
|---|---|---|---|---|
| | 1 | 2 | 3 | 4 |
| Specific gravity of the composite (g/cm$^3$) | 2.1 | 2.32 | 2.4 | 2.48 |
| Specific surface area of the composite (m$^2$/g) | 5 | 3.1 | 18.5 | 19.2 |
| Electrical conductivity (S/cm) | 1.03 | - | - | - |
| Compressed density (g/cc) | 1.81 | - | - | - |
| Discharge capacity (mAh/g) | 1,550 | 800 | 600 | 580 |
| Initial efficiency (%) | 74.2 | 65 | 68 | 71 |
| Capacity retention rate (%, at 50 cycles) | 80 | 49.8 | 51 | 53.2 |

As can be seen from Tables 3 and 4 above, the silicon/silicon oxide-carbon composites of Examples 1 to 13 were a silicon-silicon oxide-carbon composite having a core-shell structure comprising a core comprising silicon fine particles, a silicon oxide compound represented by $SiO_x$ ($0 < x \leq 2$), magnesium silicate and a shell formed on the core as a carbon film. In particular, all of the silicon/silicon oxide-carbon composites had an electrical conductivity of 0.5 S/cm to 10 S/cm. In such a case, the discharge capacity, initial efficiency, and capacity retention rate were all excellent.

Specifically, the silicon/silicon oxide-carbon composites of Examples 1 to 13 had a discharge capacity of 1,240 mAh/g to 1,467 mAh/g, an initial efficiency of 78% or more, and a capacity retention rate of 70% or more. In particular, Examples 1, 3 to 5, 7, and 9 had a very high discharge capacity of 1,400 mAh/g or more, Examples 2, 6, 8, and 10 had an initial efficiency of 82% or more, and Examples 1, 3, 5. and 8 had a capacity retention rate of 90% or more.

In contrast, in Comparative Example 1, magnesium was not contained in the core. The composites in Comparative Examples 2 to 4 were not in a core-shell structure; thus, their conductivity was not measured since they did not comprise a carbon film. Comparative Examples 1 to 4 had a discharge capacity, an initial efficiency, and a capacity retention rate that were significantly lowered as compared with Examples 1 to 13.

Specifically, the composite of Comparative Example 1 in which magnesium was not contained in the core had an initial efficiency as low as 74.2%. All of the composites of Comparative Examples 2 to 4, which were not in a core-shell structure that did not comprise a carbon film, had a discharge capacity of 800 mAh/g or less. The composite of Comparative Example 4 had a discharge capacity of 580 mAh/g, which was reduced by 200% or more as compared with the Examples. In addition, the capacity retention rate was also about 49% to 53%, which was reduced by almost half as compared with the silicon/silicon oxide-carbon composites of Examples 1, 3, 5, and 8 having a capacity retention rate of 90% or more.

Meanwhile, it can be seen that the capacity characteristics of the secondary battery are affected by the temperature and time when carbon is coated. For example, in the case where the carbon coating was carried out at 600°C to 1,000°C for 30 minutes to 5 hours as in Examples 1 to 10, or where it was carried out at higher than 1,000°C to 1,200°C for 30 minutes to less than 4 hours, the discharge capacity, initial efficiency, and capacity retention rate were all excellent. In contrast, in the case where the thermal treatment time was too long or too short at high temperature as in Example 11 to 13, or the thermal treatment was carried out at a low temperature, although the electrical properties were enhanced, the initial efficiency or capacity retention was deteriorated.

## Claims

1. A silicon/silicon oxide-carbon composite having a core-shell structure, wherein the core comprises a silicon fine particle, a silicon oxide compound represented by $SiO_x$ ($0 < x \leq 2$), and magnesium silicate, the shell is formed of a carbon film, and the electric conductivity of the silicon/silicon oxide-carbon composite is 0.5 S/cm to 10 S/cm.

2. The silicon/silicon oxide-carbon composite of claim 1, wherein the carbon film comprises at least one selected from the group consisting of graphene, reduced graphene oxide, and graphene oxide.

3. The silicon/silicon oxide-carbon composite of claim 1, wherein the magnesium silicate comprises an $MgSiO_3$ crystal.

4. The silicon/silicon oxide-carbon composite of claim 3, wherein the magnesium silicate further comprises an $Mg_2SiO_4$

crystal, and, in an X-ray diffraction analysis, the ratio (IF/IE) of an intensity (IF) of the X-ray diffraction peak corresponding to $Mg_2SiO_4$ crystals appearing in the range of $2\theta = 22.3°$ to $23.3°$ to an intensity (IE) of the X-ray diffraction peak corresponding to $MgSiO_3$ crystals appearing in the range of $2\theta = 30.5°$ to $31.5°$ is greater than 0 to 3.

5.  The silicon/silicon oxide-carbon composite of claim 1, wherein the content of magnesium is 3% by weight to 20% by weight based on the total weight of the silicon/silicon oxide-carbon composite.

6.  The silicon/silicon oxide-carbon composite of claim 1, wherein the carbon film further comprises at least one selected from the group consisting of a carbon nanotube and a carbon fiber.

7.  The silicon/silicon oxide-carbon composite of claim 1, wherein the content of carbon in the carbon film is 2% by weight to 20% by weight based on the total weight of the silicon/silicon oxide-carbon composite.

8.  The silicon/silicon oxide-carbon composite of claim 6, wherein the carbon film has a thickness of 5 nm to 200 nm.

9.  The silicon/silicon oxide-carbon composite of claim 1, wherein the silicon fine particle has a crystallite size of 1 nm to 20 nm.

10. The silicon/silicon oxide-carbon composite of claim 1, wherein the content of silicon in the core is 30% by weight to 80% by weight based on the total weight of the silicon/silicon oxide-carbon composite.

11. The silicon/silicon oxide-carbon composite of claim 1, wherein the core has an average particle diameter ($D_{50}$) of 2.0 $\mu$m to 10 $\mu$m.

12. The silicon/silicon oxide-carbon composite of claim 1, which has a specific gravity of 1.8 $g/cm^3$ to 3.2 $g/cm^3$ and a specific surface area (Brunauer-Emmett-Teller method; BET) of 3 $m^2/g$ to 20 $m^2/g$.

13. A negative electrode active material for a lithium secondary battery, which comprises the silicon/silicon oxide-carbon composite of claim 1.

14. The negative electrode active material for a lithium secondary battery of claim 13, which further comprises a carbon-based negative electrode material, wherein the content of the carbon-based negative electrode material is 30% by weight to 95% by weight based on the total weight of the negative electrode active material.

15. The negative electrode active material for a lithium secondary battery of claim 14, wherein the carbon-based negative electrode material comprises at least one selected from the group consisting of natural graphite, synthetic graphite, soft carbon, hard carbon, mesocarbon, carbon fiber, carbon nanotube, pyrolytic carbon, coke, glass carbon fiber, sintered organic high molecular compound, and carbon black.

16. A process for preparing a silicon/silicon oxide-carbon composite having a core-shell structure, which comprises:

    a first step of mixing silicon and silicon dioxide to obtain a silicon-silicon oxide mixture;
    a second step of evaporating and depositing the silicon-silicon oxide mixture and metallic magnesium to obtain a silicon-silicon oxide composite;
    a third step of cooling the silicon-silicon oxide composite;
    a fourth step of pulverizing the cooled silicon-silicon oxide composite to obtain a core; and
    a fifth step of coating the surface of the pulverized silicon-silicon oxide composite with carbon to form a shell on the core,
    wherein the electric conductivity is 0.5 S/cm to 10 S/cm.

17. The process for preparing a silicon/silicon oxide-carbon composite of claim 16, wherein the mixing in the first step is mixing of a silicon powder and a silicon dioxide powder such that the molar ratio of the oxygen element per mole of the silicon element is 0.9 to 1.1.

18. The process for preparing a silicon/silicon oxide-carbon composite of claim 16, wherein the cooling in the third step is carried out at room temperature while an inert gas is injected.

19. The process for preparing a silicon/silicon oxide-carbon composite of claim 16, wherein the pulverization in the fourth step is carried out such that the core has an average particle diameter ($D_{50}$) of 2.0 $\mu$m to 10 $\mu$m.

20. The process for preparing a silicon/silicon oxide-carbon composite of claim 16, wherein the coating of carbon in the fifth step is carried out on the surface of the core by injecting at least one selected from a compound represented by the following Formulae 2 to 4 and carrying out a reaction in a gaseous state at 600°C to 1,200°C:

$$[Formula\ 2] \qquad C_NH_{(2N+2-A)}[OH]_A$$

in Formula 2, N is an integer of 1 to 20, and A is 0 or 1,

$$[Formula\ 3] \qquad C_NH_{(2N)}$$

in Formula 3, N is an integer of 2 to 6, and

$$[Formula\ 4] \qquad C_xH_yO_z$$

in Formula 4, x is an integer of 1 to 20, y is an integer of 0 to 20, and z is an integer of 0 to 2.

21. The process for preparing a silicon/silicon oxide-carbon composite of claim 16, wherein the coating of carbon in the fifth step is carried out by injecting a carbon source gas comprising at least one selected from the group consisting of methane, ethane, propane, ethylene, acetylene, benzene, toluene, and xylene; and an inert gas comprising at least one selected from the group consisting of carbon dioxide gas, argon, water vapor, helium, nitrogen, and hydrogen.

<div align="center">

**INTERNATIONAL SEARCH REPORT**

</div>

| International application No. |
| --- |
| **PCT/KR2020/011062** |

**A.    CLASSIFICATION OF SUBJECT MATTER**

**H01M 4/36**(2006.01)i; **H01M 4/38**(2006.01)i; **H01M 4/48**(2010.01)i; **H01M 4/62**(2006.01)i; **H01M 4/587**(2010.01)i; **C01B 33/02**(2006.01)i; **C01B 33/113**(2006.01)i; **C01B 33/22**(2006.01)i; **C01B 32/182**(2017.01)i

According to International Patent Classification (IPC) or to both national classification and IPC

**B.    FIELDS SEARCHED**

Minimum documentation searched (classification system followed by classification symbols)

H01M 4/36; C01B 32/05; H01M 10/0525; H01M 4/131; H01M 4/58; H01M 4/38; H01M 4/48; H01M 4/62; H01M 4/587; C01B 33/02; C01B 33/113; C01B 33/22; C01B 32/182

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 규소 미립자(silicon fine particle), 산화규소 화합물(silicon oxide compound, SiOx), 규산 마그네슘(magnesium silicate), 탄소 피막(carbon shell), 전기 전도율(electric conductivity), 음극 활물질(negative active material), 리튬 이차전지(lithium secondary battery)

**C.    DOCUMENTS CONSIDERED TO BE RELEVANT**

| Category* | Citation of document, with indication, where appropriate, of the relevant passages | Relevant to claim No. |
| --- | --- | --- |
| X | KR 10-2019-0066596 A (DAE JOO ELECTRONIC MATERIALS CO., LTD.) 13 June 2019. See paragraphs [0018]-[0047] and [0054]-[0057]. | 1-21 |
| X | KR 10-2019-0030676 A (DAE JOO ELECTRONIC MATERIALS CO., LTD.) 22 March 2019. See paragraphs [0017]-[0046] and [0055]-[0060]. | 1-21 |
| X | KR 10-2019-0065182 A (DAE JOO ELECTRONIC MATERIALS CO., LTD.) 11 June 2019. See paragraphs [0013], [0014], [0025]-[0039], [0041]-[0045], [0047]-[0050], [0052]-[0071] and [0078]-[0081]. | 1-21 |
| PX | KR 10-2019-0116011 A (DAE JOO ELECTRONIC MATERIALS CO., LTD.) 14 October 2019. See paragraphs [0047]-[0076] and [0080]-[0085]. | 1-21 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 November 2020** | **30 November 2020** |

| Name and mailing address of the ISA/KR | Authorized officer |
| --- | --- |
| **Korean Intellectual Property Office**<br>**Government Complex Daejeon Building 4, 189, Cheongsa-ro, Seo-gu, Daejeon, Republic of Korea**<br>**35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2020/011062**

**C.     DOCUMENTS CONSIDERED TO BE RELEVANT**

| Category* | Citation of document, with indication, where appropriate, of the relevant passages | Relevant to claim No. |
|---|---|---|
| PX | KR 10-2019-0116012 A (DAE JOO ELECTRONIC MATERIALS CO., LTD.) 14 October 2019. See paragraphs [0048]-[0077] and [0081]-[0086]. | 1-21 |

Form PCT/ISA/210 (second sheet) (July 2019)

**INTERNATIONAL SEARCH REPORT**
Information on patent family members

International application No.

**PCT/KR2020/011062**

| Patent document cited in search report | | | Publication date (day/month/year) | Patent family member(s) | | | Publication date (day/month/year) |
|---|---|---|---|---|---|---|---|
| KR | 10-2019-0066596 | A | 13 June 2019 | CN | 111433949 | A | 17 July 2020 |
| | | | | US | 2020-0295352 | A1 | 17 September 2020 |
| | | | | WO | 2019-112325 | A1 | 13 June 2019 |
| KR | 10-2019-0030676 | A | 22 March 2019 | CN | 108630887 | A | 09 October 2018 |
| | | | | EP | 3379611 | A1 | 26 September 2018 |
| | | | | JP | 2018-156922 | A | 04 October 2018 |
| | | | | JP | 6306767 | B1 | 04 April 2018 |
| | | | | KR | 10-1960855 | B1 | 21 March 2019 |
| | | | | KR | 10-1999191 | B1 | 11 July 2019 |
| | | | | US | 2018-0269475 | A1 | 20 September 2018 |
| KR | 10-2019-0065182 | A | 11 June 2019 | CN | 111418095 | A | 14 July 2020 |
| | | | | WO | 2019-108050 | A1 | 06 June 2019 |
| KR | 10-2019-0116011 | A | 14 October 2019 | None | | | |
| KR | 10-2019-0116012 | A | 14 October 2019 | None | | | |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5555978 B
- JP 2014067713 A
- JP 2018048070 A
- JP 2016164870 A